# EUROPÄISCHE PATENTSCHRIFT

(11) **EP 2 907 225 B1**
(45) Veröffentlichungstag und Bekanntmachung des Hinweises auf die Patenterteilung: **19.10.2022**
(21) Anmeldenummer: 13821835.9
(22) Anmeldetag: 30.12.2013
(51) Int. Cl.: H02K 3/40, H02K 15/12

(54) **VERFAHREN UND VORRICHTUNG ZUM AUSBILDEN EINES GLIMMSCHUTZES SOWIE WICKLUNGSSTAB MIT EINEM SOLCHEN GLIMMSCHUTZ**
METHOD AND DEVICE FOR FORMING CORONA SHIELDING AND WINDING BAR WITH SUCH A SHIELDING
PROCÉDÉ ET DISPOSITIF PERMETTANT DE RÉALISER UN REVÊTEMENT ANTI-EFFLUVES ET BARRE D'ENROULEMENT AVEC UN TEL REVÊTEMENT

(30) Priorität: 15.01.2013 DE 102013200499
(43) Veröffentlichungstag der Anmeldung: 19.08.2015
(73) Patentinhaber: Siemens Energy Global GmbH & Co. KG, 81739 München (DE)
(72) Erfinder: GRIEM, Harald, 91080 Spardorf (DE); LANG, Steffen, 91352 Hallerndorf (DE); POHLMANN, Friedhelm, 45355 Essen (DE); STAUBACH, Christian, 45768 Marl (DE)
(86) Internationale Anmeldenummer: PCT/EP2013/078111
(87) Internationale Veröffentlichungsnummer: WO 2014/111235

(56) Entgegenhaltungen:
- EP-A1- 2 521 247
- DE-A1- 1 463 783
- DE-A1- 2 050 674
- JP-A- S5 683 238

## Beschreibung

Die vorliegende Erfindung betrifft ein Verfahren zum Ausbilden eines Glimmschutzes auf einem Wicklungsstab für eine Hochspannungsmaschine. Zudem betrifft die Erfindung eine Vorrichtung zum Ausbilden des Glimmschutzes auf dem Wicklungsstab für die Hochspannungsmaschine, sowie einen entsprechend ausgestatteten Wicklungsstab.

Zur Erzeugung von elektrischer Energie werden typischerweise Hochspannungsmaschinen in Form von Generatoren eingesetzt. Die EP 1 981 150 A2 beschreibt einen Generator mit einem drehbaren Läufer und einem um den Läufer angeordneten Ständer. Der Ständer weist ein rotationssymmetrisch ausgestaltetes Blechpaket auf, in dem elektrisch leitende Wicklungsstäbe verlaufen. An das Blechpaket schließt sich beidseitig ein Wicklungskopf an, der die Wicklungsstäbe über Verbindungsstege zu einer geschlossenen Wicklung verbindet.

Im Betrieb von Hochspannungsmaschinen mit Leistungen von über 500 MVA können Bemessungsspannungen von über 10 kV erreicht werden. Die Komponenten sind entsprechend hohen mechanischen, thermischen und elektrischen Belastungen ausgesetzt. Insbesondere die im Blechpaket verlaufenden Wicklungsstäbe sind daher mit einem elektrischen Isolationssystem ausgestattet, das einen Verschleiß durch elektrische Teilentladungen verhindern soll.

Ein Glimmschutz für einen Wicklungsstab, der einen Außenglimmschutz und einen Endenglimmschutz umfasst, ist aus der DE 1463783 bekannt.

Aus der DE 2050674 ist eine Anordnung zur Vermeidung von Glimmentladungen an Spulenköpfen rotierender elektrischer Maschinen bekannt, wobei ein im Verhältnis zu den geerdeten Maschinenteilen naheliegender Teil einer Spule mit einer auf der Spulenisolation und mit gewissem Abstand von der Nut angeordneten leitenden Schicht versehen ist.

In EP 2 521 247 A1 ist ein elektrisches Isolationssystem für Wicklungsstäbe in Hochspannungsmaschinen beschrieben, in dem jeder Wicklungsstab mit einer Hauptisolation umhüllt ist. Zusätzlich ist zwischen Hauptisolation und Wicklungsstab eine schwach leitende innere Potentialsteuerung vorgesehen. Die Hauptisolation ist weiterhin von einem Glimmschutz umhüllt, der einen Außenglimmschutz und einen Endenglimmschutz umfasst.

Durch den Glimmschutz und die innere Potentialsteuerung wird die Hauptisolation gegen Hohlräume und Ablösungen abgeschirmt. So wird das elektrische Potential in der Hauptisolation ausgehend von der inneren Potentialsteuerung in radialer Richtung bis zum Außenglimmschutz abgebaut. Im Bereich der Austrittstelle der Wicklungsstäbe aus dem Blechpaket endet der Außenglimmschutz, während die Hauptisolation in Richtung des Wickelkopfes weitergeführt wird. Das elektrische Feld hat in diesem Bereich neben der radialen auch eine tangentiale Komponente parallel zur Grenzfläche der Hauptisolation. Die größte Feldstärke tritt dabei am Ende des Außenglimmschutzes auf.

Daher ist es erforderlich, für eine Potentialsteuerung am Ende des Außenglimmschutzes und für eine elektrische Festigkeitserhöhung in der Umgebung der freiliegenden Hauptisolierung zu sorgen. Dies wird durch den Endenglimmschutz erreicht. Ziel der Potentialsteuerung ist es dabei, den tangentialen Potentialaufbau entlang der Oberfläche der Hauptisolation zu vergleichmäßigen. Im Bereich des Endenglimmschutzes wird das Potential sukzessive aufgebaut, bis es im Bereich des Wicklungskopfes auf Hochspannung liegt. Dieser Potentialverlauf wird an beiden Stabenden realisiert und ist somit symmetrisch aufgebaut.

Zum Ausbilden des Glimmschutzes werden auf die Hauptisolation weitere Schichten in Form von Lacken aufgebracht. Dabei enthalten die Lacke für den Endenglimmschutz und den Außenglimmschutz jeweils unterschiedliche Füllstoffe, wie Graphit und Siliziumkarbid.

Aufgabe der Erfindung ist es ein Verfahren und eine Vorrichtung bereitzustellen, die das Ausbilden des Glimmschutzes auf einem Wicklungsstab für eine Hochspannungsmaschine vereinfachen und den Glimmschutz verbessern.

Es wird ein Verfahren zum Ausbilden eines Glimmschutzes auf einem Wicklungsstab für Hochspannungsmaschinen vorgeschlagen. Dabei umfasst der Glimmschutz einen Endenglimmschutz in einem ersten Abschnitt und einen Außenglimmschutz in einem zweiten Abschnitt, welcher sich an den ersten Abschnitt anschließt. Das Verfahren umfasst folgende Schritte:
- Bereitstellen einer ersten Zusammensetzung, welche ein Trägermaterial und einen darin enthaltenen ersten Füllstoff mit einem ersten elektrischen Widerstand umfasst;
- Bereitstellen einer zweiten Zusammensetzung, welche das gleiche Trägermaterial und einen darin enthaltenen zweiten Füllstoff mit einem zweiten elektrischen Widerstand umfasst, wobei der erste und der zweite Füllstoff ein gleiches dotierbares Halbleitermaterial enthalten, dessen Dotierung den elektrischen Widerstand des ersten und zweiten Füllstoffes bestimmt, und wobei sich der zweite Widerstand von dem ersten Widerstand unterscheidet;
- Applizieren der ersten Zusammensetzung in dem ersten Abschnitt zum Bilden des Endenglimmschutzes; und
- Applizieren der zweiten Zusammensetzung in dem zweiten Abschnitt zum Bilden des Außenglimmschutzes, wobei die erste Zusammensetzung beim Applizieren so eingestellt wird, dass sich der elektrische Widerstand der ersten Zusammensetzung entlang des ersten Abschnittes (9) in Richtung des zweiten Abschnittes (11) verkleinert, und wobei
   beim Applizieren (S2) entlang des ersten Abschnittes (9) der Gewichtsanteil des ersten Füllstoffes und der Gewichtsanteil des zweiten Füllstoffes kontinuierlich so variiert werden, dass der Widerstand der ersten Zusammensetzung entlang des ersten Abschnittes (9) kontinuierlich variiert und kontinuierlich in den Widerstand der zweiten Zusammensetzung in dem zweiten Abschnitt (11) übergeht.

Zudem wird eine Vorrichtung zum Herstellen eines Glimmschutzes für einen Wicklungsstab mit den Merkmalen des Anspruchs 9 und der Wicklungsstab selbst mit den Merkmalen des Anspruchs 11 vorgeschlagen. Dabei weist der Glimmschutz einen Endenglimmschutz in einem ersten Abschnitt und einen Außenglimmschutz in einem zweiten Abschnitt auf, welcher sich an den ersten Abschnitt anschließt.

Werden für beide Zusammensetzungen das gleiche Trägermaterial, beispielsweise der gleiche Lack, und Füllstoffe mit den gleichen Eigenschaften, wie Dichte, Geometrie und Größe, eingesetzt, kann der Glimmschutz mit Endenglimmschutz und Außenglimmschutz in einem Zug (ein einziger Fertigungsschritt) ausgebildet werden. D.h., eine entsprechende Vorrichtung zum Auftragen des Enden- und Außenglimmschutzes muss nicht umgerüstet werden.

Die Ausbildung des Glimmschutzes ist somit wesentlich schneller, einfacher und kostengünstiger realisierbar als bei den im Stand der Technik bekannten Verfahren.

Zusätzlich ist der ausgebildete Glimmschutz elektrisch und thermisch stabiler, da bei Ausbilden des Glimmschutzes in nur einem Fertigungsschritt ein kontinuierlicher Übergang zwischen Endenglimmschutz und Außenglimmschutz geschaffen wird. Insbesondere geht der Endenglimmschutz kontinuierlich in den Außenglimmschutz über und sprungartige Übergangsstellen, an denen regelmäßig hohe Feldstärken auftreten, werden vermieden.

Unter einer Hochspannungsmaschine wird im vorliegenden Zusammenhang insbesondere ein Generator, wie ein Turbogenerator, mit einer elektrischen Leistung von beispielsweise mehr als 50 MVA verstanden. Bevorzugte Generatoren haben Leistungen von mehr als 500 MVA und weisen Bemessungsspannungen von mehr als 1 kV, bevorzugt von mehr als 10 kV, auf. Das Verfahren und die Vorrichtung können neben Wicklungsstäben auch in Transformatoren oder Betriebsmitteln mit Bemessungsspannungen von über 1 kV zum Einsatz kommen. Beispiele solcher Betriebsmittel sind Durchführungen oder Kabel.

Für Hochspannungsmaschinen kann der Wicklungsstab einen elektrischen Leiter oder einen Verbund aus mehreren elektrischen Leitern aufweisen, die beispielsweise Ströme von mehreren 10 kA führen können. Als Leiter eigenen sich insbesondere Kupferleiter.

Zur elektrischen Isolation kann der Wicklungsstab mit einer Hauptisolation umgeben sein. Die Hauptisolation umfasst zum Beispiel eine Matrix, wie Epoxidharz, mit Glimmerpartikeln als Füllstoff. Beispielsweise weisen die Glimmerpartikel eine Plättchenform mit einem Aspektverhältnis von 10 bis 100, bevorzugt 40 bis 80, auf. Das Aspektverhältnis bezieht sich hierbei auf das Verhältnis jeweils von Länge und Breite zu Dicke. Weiterhin können die plättchenförmigen Glimmerpartikel in der Hauptisolation flächig ausgerichtet sein und in mehreren Schichten überlappend angeordnet sein. Dadurch werden die elektrische und die mechanische Festigkeit der Hauptisolation erhöht.

Der Wicklungsstab ist in einer Hochspannungsmaschine vorzugsweise durch ein Blechpaket geführt und weist beidseitig überstehende Enden auf, die zur Ausbildung einer Leiterschleife an einem Wickelkopf umgelenkt werden. In dieser Anordnung kann sich der Außenglimmschutz innerhalb des Blechpakets und über eine Teillänge außerhalb des Blechpakets erstrecken. An den Außenglimmschutz schließt sich der Endenglimmschutz vorzugsweise unmittelbar an und erstreckt sich über eine Teillänge des Wicklungsstabes, die zwischen Blechpaket und Wicklungskopf angeordnet ist. Der Glimmschutz auf dem Wicklungsstab wird somit vorzugsweise symmetrisch ausgebildet, wobei sich an beiden Seiten des Außenglimmschutzes jeweils ein Endenglimmschutz anschließt.

In einer Ausführungsform wird die zweite Zusammensetzung beim Applizieren so eingestellt, dass der elektrische Widerstand der zweiten Zusammensetzung entlang des zweiten Abschnittes im Wesentlichen konstant ist. Im Wesentlichen bedeutet hierbei, dass der elektrische Widerstand um weniger als 100 Ω, bevorzugt um weniger als 10 Ω, schwankt.

In einer weiteren Ausführungsform wird der elektrische Widerstand der ersten Zusammensetzung eingestellt, indem ein Gewichtsanteil des ersten Füllstoffes durch einen Gewichtsanteil des zweiten Füllstoffes ersetzt wird. Der elektrische Widerstand der ersten Zusammensetzung wird daher durch den Gewichtsanteil von erstem und zweitem Füllstoff in dieser bestimmt. Hierbei ist der Gewichtsanteil auf das Gesamtgewicht des ersten und zweiten Füllstoffes in der ersten Zusammensetzung bezogen.

Erfindungsgemäß wird die erste Zusammensetzung beim Applizieren so eingestellt, dass sich der elektrische Widerstand der ersten Zusammensetzung entlang des ersten Abschnittes in Richtung des zweiten Abschnittes verkleinert. So wird im ersten Abschnitt ein Endenglimmschutz realisiert, der einen ortsabhängigen und gleichzeitig feldstärkenunabhängigen Widerstand entlang des ersten Abschnittes aufweist. Entsprechend des elektrischen Widerstandes steigt das Potential vom Ende des Außenglimmschutzes entlang des Endenglimmschutzes im ersten Abschnitt an. So wird der Potentialverlauf vergleichmäßigt und ein Potentialsprung am Ende des Außenglimmschutzes vermieden.

In einer weiteren Ausführungsform kann beim Applizieren entlang des ersten Abschnittes der Gewichtsanteil des ersten Füllstoffes und des zweiten Füllstoffes kontinuierlich so variiert wird, dass der Widerstand der ersten Zusammensetzung entlang des ersten Abschnittes kontinuierlich variiert und kontinuierlich in den Widerstand der zweiten Zusammensetzung im zweiten Abschnitt übergeht. So kann ein Endenglimmschutz mit kontinuierlich variierendem Widerstand realisiert werden, wodurch das Potential am Ende des Außenglimmschutzes stetig, also ohne Sprünge oder Stufen, ansteigt. Durch den kontinuierlichen Übergang zwischen dem Außenglimmschutz und dem Endenglimmschutz wird weiterhin eine sprungartige Änderung im Widerstandsverlauf und im entsprechenden Potentialverlauf vermieden.

Dabei können neben dem ersten und zweiten Füllstoff weitere Füllstoffe in der ersten Zusammensetzung enthalten sein, welche einen zu dem ersten und zweiten Widerstand unterschiedlichen Widerstand aufweisen. Insbesondere kann mindestens ein dritter Füllstoff mit einem dritten Widerstand enthalten sein, wobei der dritte Füllstoff ebenfalls das gleiche dotierbare Halbleitermaterial umfasst und sich der dritte Widerstand von dem ersten und zweiten Widerstand unterscheidet. Vorzugsweise liegt der dritte Widerstand zwischen dem ersten und zweiten Widerstand. Je mehr Füllstoffe mit unterschiedlichen Widerständen in der ersten Zusammensetzung enthalten sind, desto genauer kann die Potentialsteuerung durch den Endenglimmschutz eingestellt werden. Insbesondere kann ein linearer Potentialverlauf verwirklicht werden.

In einer weiteren Ausführungsform kann die erste Zusammensetzung einen größeren elektrischen Widerstand aufweisen als die zweite Zusammensetzung. Dadurch kann ein Außenglimmschutz gebildet werden, der typische Quadratwiderstandswerte (gemessen bei einer Feldstärke von 100 V/mm) im Bereich von 1*10e3 bis 1*10e6 Ω, bevorzugt im Bereich von 1*10e4 bis 1*10e5 Ω, aufweist. Der Endglimmschutz kann dagegen einen variierenden Quaradtwiderstandswert (gemessen bei einer Feldstärke von 100 V/mm) im Bereich von 1*10e3 bis 1*10e15 Ω, bevorzugt im Bereich von 1*10e4 bis 5*10e13 Ω, aufweisen. So kann die Potentialstreuung am Ende des Außenglimmschutzes durch den sich anschließenden Endenglimmschutz vergleichmäßigt werden.

Um den Widerstand der Zusammensetzungen einfach anzupassen, umfassen der erste, zweite und dritte Füllstoff planare Glimmerpartikel beschichtet mit demselben dotierbaren Halbleitermaterial, wobei die Dotierung des Halbleitermaterials den elektrischen Widerstand des ersten, zweiten und dritten Füllstoffes bestimmt. Durch die Dotierung des Halbleitermaterials können Füllstoffe mit unterschiedlichen elektrischen Widerständen bereitgestellt werden, die bei der Verarbeitung jedoch gleiche Eigenschaften aufweisen. Der elektrische Widerstand der Zusammensetzungen ist entsprechend einfach über die darin enthaltenen Füllstoffe einstellbar und kann an die Anforderungen des jeweiligen Abschnittes angepasst werden, ohne dass es unterschiedlicher Materialien für die Füllstoffe bedarf.

Beispielsweise kann der Füllstoff Zinnoxid (SnO₂) dotiert mit Antimon (Sb) umfassen. Dabei können die Glimmerpartikel eine Plättchenform mit einem Aspektverhältnis von 10 bis 100, bevorzugt von 20 bis 50, aufweisen. Durch die Verwendung des dotierbaren Halbleitermaterials können je nach Dotierung unterschiedliche elektrische Quadratwiderstände im Bereich von 1*10e3 bis 5*10e13 Ω, realisiert werden. Um einen Füllstoff mit einem hohen Quadratwiderstand im Bereich von 1*10e10 bis 1*10e15 Ω, bevorzugt 1*10e12 bis 1*10e13 Ω, bereitzustellen, können die Glimmerpartikel zusätzlich mit einer elektrisch isolierenden Schicht, wie Titandioxid (TiO₂), überzogen sein.

Vorzugsweise wird die Dotierung des dotierbaren Halbleitermaterials so gewählt, dass der elektrische Quadratwiderstand der verwendeten Füllstoffe in Schritten von 1*10e2 bis 1*10e5, beispielsweise in Schritten von etwa 1*10e4, variiert. So können je nach axialer Position entlang des Wicklungsstabes unterschiedliche erste und zweite Zusammensetzungen bereitgestellt werden, deren elektrischer Widerstand jeweils über einen weiten Bereich durch die in der ersten und zweiten Zusammensetzung enthaltenen Füllstoffe angepasst wird.

In einer Ausführungsform weist das Trägermaterial der ersten und/oder zweiten Zusammensetzung einen Füllstoffanteil von mehr als 45 Gew.-%, bevorzugt mehr als 50 Gew.-% auf. Angaben in Gew.-% sind hierbei auf das Gesamtgewicht der Zusammensetzung bezogen. Bei einem derartigen Gewichtsanteil von Füllstoff, können sich die Füllstoffe in dem Trägermaterial berühren und entsprechende Leitungspfade ausbilden. Dadurch wird die elektrische Leitfähigkeit bis zu einer Sättigung erhöht. In der Sättigung hängt die elektrische Leitfähigkeit oder der elektrische Widerstand der Zusammensetzung im Wesentlichen von dem elektrischen Widerstand der enthaltenen Füllstoffe ab. Um den elektrischen Widerstand der Zusammensetzung zu kontrollieren, liegt der Gewichtsanteil von Füllstoff vorzugsweise in der Sättigung. Im Fall von beschichteten Glimmerpartikeln als Füllstoff entspricht dies mindestens 45 Gew.-% bezogen auf die erste oder zweite Zusammensetzung.

Bevorzugt wird der Glimmschutz mit Endenglimmschutz und Außenglimmschutz in einem kontinuierlichen Verfahren ausgebildet. D. h. der Endenglimmschutz und der Außenglimmschutz werden in einem einzigen Fertigungsschritt hergestellt.

Das Trägermaterial kann einen lösemittelhaltigen oder einen lösemittelfreien Kunststoff enthalten. Bevorzugte Trägermaterialien sind lösemittelhaltige Kunststoffe in Form von Lacken. Geeignete Kunststoffe sind zum Beispiel Duromere oder Thermoplasten, da diese bei Raumtemperatur verarbeitbar sind, bis 200 Grad Celsius, bevorzugt bis 140 Grad Celsius, thermisch beständig sind und sich bei Zugabe von entsprechenden Härtern bei Raumtemperatur durch ultraviolettes(UV) oder infrarotes (IR) Licht härten lassen. Beispielsweise eignen sich für das Trägermaterial Kunststoffe auf Polysilazan-Basis, Polyesterimid-Basis oder Epoxid-Basis. Das Lösungsmittel kann weiterhin aromatische Kohlenwasserstoffe, wie Benzol oder Toluol Ester, Ethylmthylketon oder Ethylacetat enthalten.

Je nach Trägermaterial können die erste und die zweite Zusammensetzung mit unterschiedlichen Verfahren appliziert werden. Zusammensetzungen mit lösemittelhaltigen Trägermaterialien eignen sich beispielsweise zum Sprühen. Zusammensetzungen mit lösemittelfreien Trägermaterialien können als Pulverbeschichtung auf dem Wicklungsstab appliziert werden.

Bevorzugt werden die erste und die zweite Zusammensetzung aufgesprüht. Zum Applizieren der ersten und der zweiten Zusammensetzung können eine oder mehrere Sprühdüsen eingesetzt werden.

In einer Ausführungsform können die erste und die zweite Zusammensetzung von einem Mischer in gemischter Form bereitgestellt werden und mit einer einzigen Sprühdüse appliziert werden.

In einer weiteren Ausführungsform kann die erste Zusammensetzung mit mindestens einer ersten Sprühdüse und die zweite Zusammensetzung mit mindestens einer zweiten Sprühdüse appliziert werden. Dabei kann jede Sprühdüse Füllstoff mit einem elektrischen Widerstand auf den Wicklungsstab applizieren, wobei die Intensität jeder Sprühdüse die erste und zweite Zusammensetzung in Bezug auf die enthaltenen Füllstoffe und damit den jeweiligen Widerstand einstellt.

In einer Ausführungsform weist die erste Einrichtung mehrere Vorratsbehälter mit Füllstoffen auf, die je Vorratsbehälter einen anderen elektrischen Widerstand aufweisen. So kann der erste, zweite und gegebenenfalls dritte Füllstoff je in einem Vorratsbehälter bevorratet werden. Weiterhin kann das Trägermaterial in einem gesonderten Vorratsbehälter oder zusammen mit den Füllstoffen in den Vorratsbehältern bereitgestellt werden.

Die zweite Einrichtung kann eine oder mehrere Sprühdüsen aufweisen. Die Sprühdüsen sind dabei in axialer Richtung entlang des Wicklungsstabes beweglich gelagert.

Bei einer zweiten Einrichtung mit mehreren Sprühdüsen kann die erste Einrichtung mehrere Vorratsbehälter für die jeweiligen Füllstoffe umfassen, die jeweils einer Sprühdüse zugeordnet sind.

Weiterhin können bei mehreren Sprühdüsen die Sprühdüsen jeweils mit einem Steuergerät verbunden sein, durch das die erste Zusammensetzung entlang des ersten Abschnittes hinsichtlich ihres elektrischen Widerstands veränderbar und die zweite Zusammensetzung entlang des zweiten Abschnitts mit im Wesentlichen konstantem elektrischem Widerstand einstellbar ist. So werden die Zusammensetzungen und deren Widerstand durch die Menge des jeweils aufgebrachten Füllstoffes gesteuert, um eine ortsabhängige erste und zweite Zusammensetzung in axialer Richtung entlang des Wicklungsstabes zu realisieren. Dabei wird die Intensität der jeweiligen Sprühdüse je nach axialer Position der Sprühdüse und dementsprechender Zusammensetzung gesteuert.

Wird lediglich eine einzige Sprühdüse verwendet, ist zwischen den Vorratsbehältern und der Sprühdüse ein Mischer angeordnet. So können die Füllstoffe mit unterschiedlichen elektrischen Widerständen dem Mischer in den gewünschten Gewichtsanteilen zugeführt und zu einer ersten und zweiten Zusammensetzung vermischt werden. Um die Gewichtsanteile der Füllstoffe mit unterschiedlichen Widerständen in der ersten und zweiten Zusammensetzung zu steuern, kann der Mischer weiterhin mit einem Steuergerät verbunden sein. Mittels des Steuergeräts lässt sich somit die erste Zusammensetzung entlang des ersten Abschnittes hinsichtlich ihres elektrischen Widerstands verändern und die zweite Zusammensetzung entlang des zweiten Abschnitts mit im Wesentlichen konstantem elektrischem Widerstand einstellen. So wird die Zusammensetzung und deren Widerstand durch die Gewichtsanteile der dem Mischer zugeführten Füllstoffe gesteuert, um eine ortsabhängige erste und zweite Zusammensetzung in axialer Richtung entlang des Wicklungsstabes zu realisieren. Dementsprechend wird dem Mischer je nach axialer Position der Sprühdüse die entsprechende Zusammensetzung zugeführt.

Die in Bezug auf das Verfahren beschriebenen Merkmale und Ausführungsformen gelten für die Vorrichtung entsprechend. Genauso gelten die in Bezug auf die Vorrichtung beschriebenen Merkmale und Ausführungsformen für das Verfahren entsprechend.

Im Folgenden wird anhand der beigefügten schematischen Zeichnung die Erfindung näher erläutert.

Dabei zeigen:
Fig. 1 ausschnittsweise einen Längsschnitt eines Generatorständers mit einem Blechpaket und einem Wicklungsstab;
Fig. 2 einen Ablauf eines Verfahrens zum Ausbilden eines Glimmschutzes in Form eines Flussdiagramms;
Fig. 3 einen Verlauf des elektrischen Widerstandes entlang des Wicklungsstabs der Fig. 1;
Fig. 4 eine beispielhafte Vorrichtung zur Durchführung des Verfahrens gemäß Fig. 2; und
Fig. 5 eine weitere beispielhafte Vorrichtung zur Durchführung des Verfahrens gemäß Fig. 2.

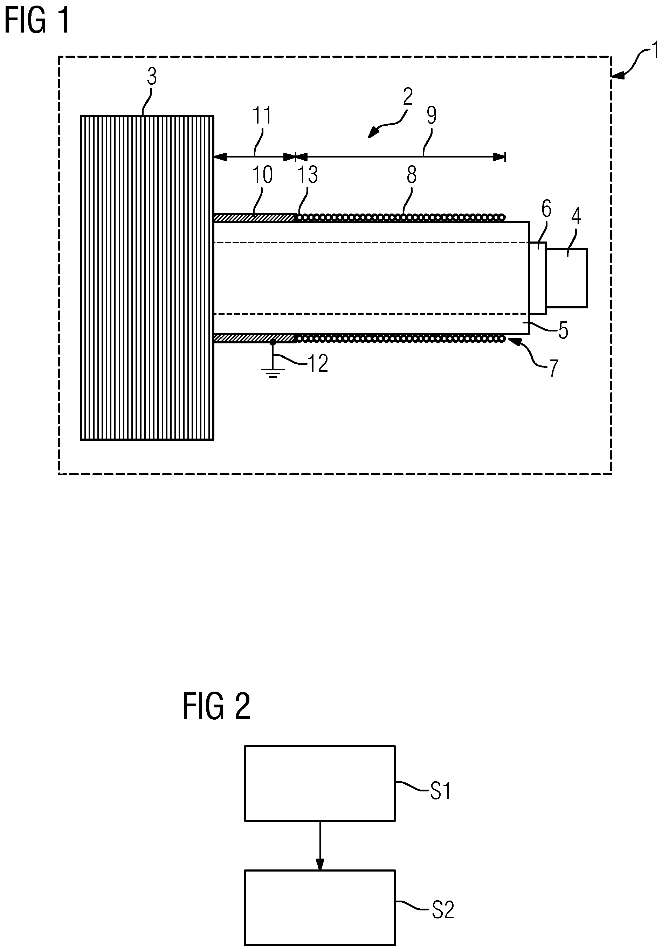

Fig. 1 zeigt einen Ausschnitt eines Generators 1, der einen Generatorständer 2 mit einem Blechpaket 3 und einem Wicklungsstab 4 umfasst.

Der Wicklungsstab 4 ist durch das Blechpaket 3 geführt. Das Ende des Wicklungsstabes 4 ragt aus dem Blechpaket 3 und wird zur Ausbildung von Leiterschleifen am Wickelkopf (nicht dargestellt) umgelenkt. Die in Fig. 1 gezeigte Anordnung ist typischerweise symmetrisch mit Wicklungsstabenden 4 auf beiden Seiten des Blechpakets 3 aufgebaut.

Zur Isolation ist der Wicklungsstab 4 von einer Hauptisolation 5 umhüllt. Um Grenzflächenteilentladungen zwischen den Komponenten des Generatorständers 2 zu vermeiden, ist die Hauptisolation 4 weiterhin mit Schichten 6, 7 umgeben. So ist zwischen Wicklungsstab 4 und Hauptisolation 5 eine Schicht 6 als innere Potentialsteuerung angeordnet.

Zwischen dem Blechpaket 3 und dem Wicklungsstab 4 befindet sich eine weitere Schicht, die als Glimmschutz 7 ausgebildet ist. Dieser umfasst einen Endenglimmschutz 8 in einem ersten Abschnitt 9 und einen Außenglimmschutz 10 in einem zweiten Abschnitt 11, wobei der Außenglimmschutz mit einer Erdung 12 verbunden ist. Der erste Abschnitt 9 verläuft dabei zwischen Blechpaket 3 und Wicklungskopf (nicht dargestellt) und schließt sich unmittelbar an den zweiten Abschnitt 11 an, welcher innerhalb des Blechpakets 3 verläuft und sich ein kurzes Stück über das Blechpaket 3 hinaus erstreckt. Dementsprechend umhüllt der Außenglimmschutz 10 die Hauptisolation 5 innerhalb des Blechpakets 3 und wird nach Austritt des Wicklungsstabes 3 aus dem Blechpaket 3 über ein kurzes Stück weiter geführt. Der Endenglimmschutz 8 schließt sich unmittelbar an den Außenglimmschutz 10 an und erstreckt sich über eine Teillänge zwischen Blechpaket 3 und Wickelkopf (nicht dargestellt). Durch die Schichten 6, 7 wird die elektrische Feldstärke innerhalb der Hauptisolation 5 ausgehend von der inneren Potentialsteuerung 6 zum Glimmschutz 7 abgebaut. An den Enden des Wicklungsstabes 4, der beidseitig aus dem Blechpaket 3 herausragt, ist der Endenglimmschutz 8 vorgesehen, der das elektrische Potential ausgehend vom Außenglimmschutz 10 abbaut.

Nach einem der Anmelderin intern bekannten Verfahren wird der Glimmschutz 7 in mehreren Fertigungsschritten aufgebracht. Insbesondere werden der Außenglimmschutz 10 und der Endenglimmschutz 8 nacheinander aufgebracht. Daraus folgen ein erhöhter Fertigungsaufwand und erhöhte Fertigungskosten. Zusätzlich entstehen durch die sukzessive Fertigung in mehreren Schritten Teilabschnitte mit Grenzflächen, wie zum Beispiel der Übergang 13 zwischen Außenglimmschutz 10 und Endenglimmschutz 8, die regelmäßig Schwachstellen im Glimmschutz 7 bilden. An derartigen Übergangsstellen 13 bilden sich hohe Feldstärken aus, was in einer thermischen und elektrischen Beanspruchung resultiert. Dabei können die Belastungen so groß werden, dass der Glimmschutz 7 und schlimmsten Falls die Hauptisolation 5 beschädigt wird.

Fig. 2 zeigt einen Ablauf des Verfahrens zum Ausbilden eines Glimmschutzes 7 in Form eines Flussdiagramms.

In einem ersten Schritt S1 wird zum Ausbilden des Glimmschutzes 7 für einen Wicklungsstab 4 eine erste und eine zweite Zusammensetzung bereitgestellt. Die erste Zusammensetzung enthält ein erstes Trägermaterial und einen darin enthaltenen ersten Füllstoff mit einem ersten elektrischen Widerstand und zweiten Füllstoff mit einem zweiten elektrischen Widerstand, wobei sich der zweite elektrische Widerstand von dem ersten elektrischen Widerstand unterscheidet. Die zweite Zusammensetzung enthält ein zweites Trägermaterial und einen darin enthaltenen dritten Füllstoff mit einem dritten elektrischen Widerstand. Dabei weist das erste und zweite Trägermaterial und/oder der zweite und dritte Füllstoff die gleiche chemische Zusammensetzung auf.

Der erste, zweite und dritte Füllstoff umfassen jeweils mit einem dotierbaren Halbleitermaterial beschichtete Glimmerpartikel, die je nach Dotierung einen anderen elektrischen Widerstand aufweisen. So weisen der erste und zweite Füllstoff der ersten Zusammensetzung beispielsweise einen ersten elektrischen Quadratwiderstand von 1*10e12 Ω und einen zweiten elektrischen Quadratwiderstand 1*10e8 Ω auf. Zusätzlich kann ein vierter Füllstoff in der ersten Zusammensetzung verwendet werden, der wie der dritte Füllstoff der zweiten Zusammensetzung einen elektrischen Quadratwiderstand von 1*10e4 Ω aufweist. Weiterhin enthalten die erste und zweite Zusammensetzung als Trägermaterial einen Lack auf Basis eines Kunststoffes, wie Polysilazan, Polyesterimid oder Epoxid.

In einem zweiten Schritt S2 werden die erste und zweite Zusammensetzung so appliziert, dass der Endenglimmschutz 8 in dem ersten Abschnitt 9 und der Außenglimmschutz 10 in dem zweiten Abschnitt 11 gebildet werden. Dabei schließt sich der Endenglimmschutz 8 unmittelbar an den Außenglimmschutz 10 an. Dementsprechend wird die erste Zusammensetzung in dem ersten Abschnitt 9 zum Bilden des Endenglimmschutzes 8 appliziert, und die zweite Zusammensetzung wird in dem zweiten Abschnitt 11 zum Bilden des Außenglimmschutzes 10 appliziert.

Beim Applizieren der ersten Zusammensetzung kann ein Gewichtsanteil des ersten und zweiten Füllstoffes entlang des ersten Abschnittes 9 verändert werden. Dadurch wird der elektrische Widerstand der ersten Zusammensetzung ortsabhängig entlang des ersten Abschnittes 9 so variiert, dass sich der elektrische Widerstand entlang des ersten Abschnittes 9 in Richtung des zweiten Abschnittes 11 verkleinert. Der Endenglimmschutz 8 weist somit einen kontinuierlich variierenden Widerstand auf, wodurch das Potential ausgehend vom Ende des Außenglimmschutzes 10 kontinuierlich im Endenglimmschutz abgebaut wird und stetig oder linear ansteigt.

Durch das Verfahren wird ein Wicklungsstab 4 mit Glimmschutz 7, wie in Fig. 1 dargestellt, ausgebildet. Dementsprechend weist der Glimmschutz 7 einen Außenglimmschutz 10 und einem Endenglimmschutz 8 auf.

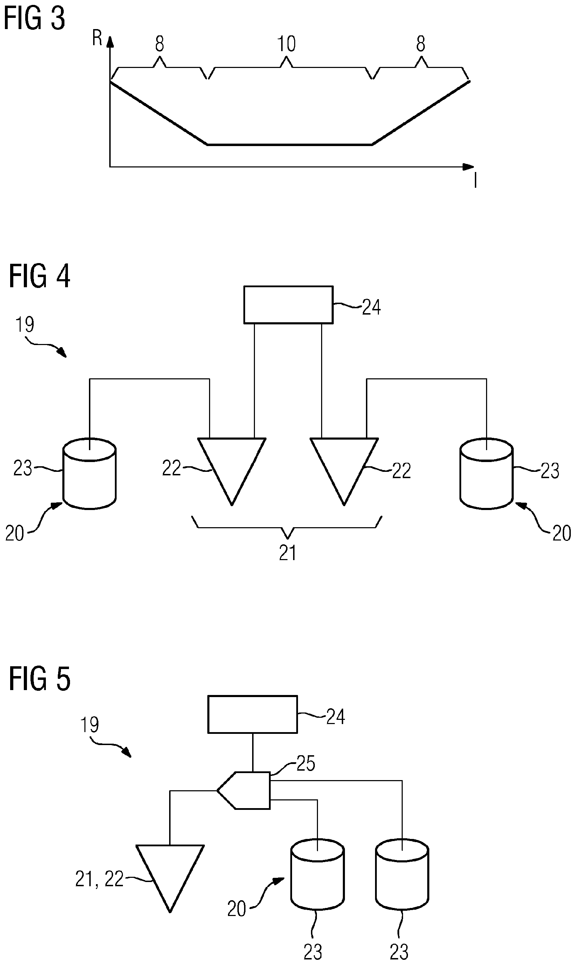

Ein Verlauf des elektrischen Widerstandes entlang des Wicklungsstabs 4 ist in Fig. 3 gezeigt.

Dabei ist der elektrische Widerstand R gegen die axiale Position l entlang des Wickelstabes 4 aufgetragen. Der elektrische Widerstand R ist im Bereich des Außenglimmschutzes 10 konstant. Mit Übergang des Außenglimmschutzes 10 in den Endenglimmschutz 8 steigt der elektrische Widerstand R im Bereich des Endenglimmschutzes 8 stetig an. Dementsprechend wird das Potential im Bereich des Endenglimmschutzes 8 vom Erdpotential des Außenglimmschutzes 10 bis zum Wickelkopf (nicht dargestellt) auf Hochspannung angehoben. Mit dem Endenglimmschutz 8 wird somit eine Potentialsteuerung realisiert, die das Potential an der Oberfläche des Wickelstabes 4 stetig anhebt.

Fig. 4 zeigt eine beispielhafte Vorrichtung 19 zum Ausbilden des Glimmschutzes 7 gemäß Fig. 1.

Die Vorrichtung 19 umfasst eine erste Einrichtung 20 zum Bereitstellen der Zusammensetzungen und eine zweite Einrichtung 21 zum Applizieren der Zusammensetzung. Die zweite Einrichtung 21 umfasst in der dargestellten Ausführungsform zwei Sprühdüsen 22, die jeweils mit einem Vorratsbehälter 23 der ersten Einrichtung 20 verbunden sind. In anderen Ausführungsformen können auch mehr als zwei Sprühdüsen 22 und Vorratsbehälter 23 vorgesehen sein.

Die Vorratsbehälter 23 enthalten jeweils den Lack mit darin dispergiertem Füllstoff, der den jeweiligen Sprühdüsen 22 zugeführt wird. So enthält der erste Vorratsbehälter 23 den ersten Füllstoff, der der ersten Sprühdüse zugeführt wird. Der zweite Vorratsbehälter 23 enthält den zweiten Füllstoff, der bei dieser Ausführungsform auch gleichzeitig als dritter Füllstoff eingesetzt und der zweiten Sprühdüse zugeführt wird. Die Lacke im ersten und zweiten Vorratsbehälter 23 können ebenfalls dieselbe chemische Zusammensetzung aufweisen.

Den Sprühdüsen 22 ist weiterhin ein Steuergerät 24 zugeordnet, mit dem die Intensität der Sprühdüsen 22 ortsabhängig steuerbar ist, wodurch wiederum der Anteil des ersten und zweiten Füllstoffs in der ersten Zusammensetzung und damit deren elektrischer Widerstand einstellbar ist. Die Sprühdüsen 22 können beispielsweise entlang des ersten Abschnitts 9 mit gegenläufiger Intensität betrieben werden. So weist die erste Sprühdüse anfänglich eine Intensität von 100% auf, während die zweite Sprühdüse 22 anfänglich eine Intensität von 0% hat. Am Ende des ersten Abschnitts 9 und zu Beginn des zweiten Abschnitts 11 liegt dann ein umgekehrte Verhältnis vor (erste Sprühdüse 0%, zweite Sprühdüse 100%). Die zweite Zusammensetzung entlang des zweiten Abschnitts 11 kann dann einfach durch Weitersprühen ausschließlich mit der zweiten Sprühdüse 22 appliziert werden.

Fig. 5 zeigt schematisch eine weitere beispielhafte Vorrichtung 19 zum Herstellen des Glimmschutzes 7.

Im Unterschied zu Fig. 4 umfasst die zweite Einrichtung 20 der Fig. 5 eine einzige Sprühdüse 22. Die Sprühdüse 22 ist mit einem Mischer 25 verbunden, der den bevorrateten Füllstoff und den Lack zu der ersten oder der zweiten Zusammensetzung mischt. Dazu werden dem Mischer 25 Füllstoff und Lack aus Vorratsbehältern 23 zugeführt. Die Vorratsbehälter 23 enthalten jeweils den Lack mit darin dispergiertem Füllstoff. So enthält der erste Vorratsbehälter 23 den ersten Füllstoff, der der ersten Sprühdüse zugeführt wird. Der zweite Vorratsbehälter 23 enthält den zweiten Füllstoff, der bei dieser Ausführungsform auch gleichzeitig als dritter Füllstoff eingesetzt und der zweiten Sprühdüse zugeführt wird. Die Lacke im ersten und zweiten Vorratsbehälter 23 können ebenfalls dieselbe chemische Zusammensetzung aufweisen. Der Mischer 25 ist weiterhin mit einem Steuergerät 24 verbunden, mit dem die Füllstoffanteile in der ersten und zweiten Zusammensetzung steuerbar sind, um der Sprühdüse 22 ortsabhängig die erste und zweite Zusammensetzung zuzuführen.

Obwohl die Erfindung vorliegend anhand verschiedener Ausführungsbeispiel beschreiben wurde, ist sie hierauf nicht beschränkt, sondern im Rahmen der Ansprüche vielfältig modifizierbar.

## Patentansprüche

1. Verfahren zum Ausbilden eines Glimmschutzes (7) auf einem Wicklungsstab (4) für Hochspannungsmaschinen (1) mit einem Endenglimmschutz (8) in einem ersten Abschnitt (9) und einem Außenglimmschutz (10) in einem zweiten Abschnitt (11), welcher sich an den ersten Abschnitt (9) anschließt, mit folgenden Schritten:
- Bereitstellen (S1) einer ersten Zusammensetzung, welche ein Trägermaterial und einen darin enthaltenen ersten Füllstoff mit einem ersten elektrischen Widerstand umfasst;
- Bereitstellen (S1) einer zweiten Zusammensetzung, welche das gleiche Trägermaterial und einen darin enthaltenen zweiten Füllstoff mit einem zweiten elektrischen Widerstand umfasst, wobei der erste und der zweite Füllstoff ein gleiches dotierbares Halbleitermaterial enthalten, dessen Dotierung den elektrischen Widerstand des ersten und zweiten Füllstoffes bestimmt, und wobei sich der zweite Widerstand von dem ersten Widerstand unterscheidet;
- Applizieren (S2) der ersten Zusammensetzung in dem ersten Abschnitt (9) zum Bilden des Endenglimmschutzes (8); und
- Applizieren (S2) der zweiten Zusammensetzung in dem zweiten Abschnitt (11) zum Bilden des Außenglimmschutzes (10),
wobei
die erste Zusammensetzung beim Applizieren so eingestellt wird, dass sich der elektrische Widerstand der ersten Zusammensetzung entlang des ersten Abschnittes (9) in Richtung des zweiten Abschnittes (11) verkleinert,
und wobei
beim Applizieren (S2) entlang des ersten Abschnittes (9) der Gewichtsanteil des ersten Füllstoffes und der Gewichtsanteil des zweiten Füllstoffes kontinuierlich so variiert werden, dass der Widerstand der ersten Zusammensetzung entlang des ersten Abschnittes (9) kontinuierlich variiert und kontinuierlich in den Widerstand der zweiten Zusammensetzung in dem zweiten Abschnitt (11) übergeht.

2. Verfahren nach Anspruch 1,
**dadurch gekennzeichnet, dass**
die zweite Zusammensetzung beim Applizieren (S2) so eingestellt wird, dass der elektrische Widerstand der zweiten Zusammensetzung entlang des zweiten Abschnittes (11) im Wesentlichen konstant ist.

3. Verfahren nach Anspruch 1 oder 2,
**dadurch gekennzeichnet, dass**
der elektrische Widerstand der ersten Zusammensetzung eingestellt wird, indem ein Gewichtsanteil des ersten Füllstoffes durch einen Gewichtsanteil des zweiten Füllstoffes ersetzt wird.

4. Verfahren nach einem der Ansprüche 1 bis 3,
**dadurch gekennzeichnet, dass**
die erste Zusammensetzung mindestens einen dritten Füllstoff mit einem dritten Widerstand enthält, wobei der dritte Füllstoff ebenfalls das gleiche dotierbare Halbleitermaterial umfasst und sich der dritte Widerstand von dem ersten und zweiten Widerstand unterscheidet.

5. Verfahren nach einem der Ansprüche 1 bis 4,
**dadurch gekennzeichnet, dass**
das Trägermaterial der ersten und zweiten Zusammensetzung einen Füllstoffanteil von mehr als 45 Gew.-% aufweist.

6. Verfahren nach einem der Ansprüche 1 bis 5,
**dadurch gekennzeichnet, dass**
der Glimmschutz (9) in einem kontinuierlichen Verfahren ausgebildet wird.

7. Verfahren nach einem der Ansprüche 1 bis 6,
**dadurch gekennzeichnet, dass**
die erste und die zweite Zusammensetzung aufgesprüht werden.

8. Verfahren nach einem der Ansprüche 1 bis 6,
**dadurch gekennzeichnet, dass**
die erste und die zweite Zusammensetzung von einem Mischer (25) in gemischter Form bereitgestellt und mit einer einzigen Sprühdüse (22) appliziert werden oder dass die erste Zusammensetzung mit mindestens einer ersten Sprühdüse (22) und die zweite Zusammensetzung mit mindestens einer zweiten Sprühdüse (22) appliziert werden.

9. Vorrichtung (19) zur Durchführung des Verfahrens nach einem der Ansprüche 1 bis 8, insbesondere zum Ausbilden eines Glimmschutzes (7) auf einem Wicklungsstab (4) für Hochspannungsmaschinen (1) mit einem Endenglimmschutz (8) in einem ersten Abschnitt (9) und einem Außenglimmschutz (10) in einem zweiten Abschnitt (11), welcher sich an den ersten Abschnitt (9) anschließt, mit:
- einer ersten Einrichtung (20) zum Bereitstellen (S1) einer ersten Zusammensetzung, welche ein Trägermaterial und einen darin enthaltenen ersten Füllstoff mit einem ersten elektrischen Widerstand umfasst, und zum Bereitstellen (S1) einer zweiten Zusammensetzung, welche das gleiche Trägermaterial und einen darin enthaltenen zweiten Füllstoff mit einem zweiten elektrischen Widerstand umfasst, wobei der erste und der zweite Füllstoff ein gleiches dotierbares Halbleitermaterial enthalten, dessen Dotierung den elektrischen Widerstand des ersten und zweiten Füllstoffes bestimmt, wobei sich der zweite Widerstand von dem ersten Widerstand unterscheidet, und wobei die erste Einrichtung (20) mehrere Vorratsbehälter (23) mit Füllstoff aufweist, der je Vorratsbehälter (23) einen anderen elektrischen Widerstand aufweist,
- einer zweiten Einrichtung (21) zum Applizieren (S2) der ersten Zusammensetzung in dem ersten Abschnitt (9), um den Endenglimmschutz (8) zu bilden, und zum Applizieren (S2) der zweiten Zusammensetzung in dem zweiten Abschnitt (11), um den Außenglimmschutzes (10) zu bilden, wobei die zweite Einrichtung (21) eine oder mehrere Sprühdüsen (22) aufweist, wobei die mehreren Sprühdüsen (22) jeweils mit einem Steuergerät (24) verbunden sind, durch das die erste Zusammensetzung entlang des ersten Abschnittes hinsichtlich ihres elektrischen Widerstandes veränderbar und die zweite Zusammensetzung entlang des zweiten Abschnitts mit einem Wesentlichen konstanten elektrischen Widerstand einstellbar ist, und wobei die erste Zusammensetzung beim Applizieren so eingestellt wird, dass sich der elektrische Widerstand der ersten Zusammensetzung entlang des ersten Abschnittes (9) in Richtung des zweiten Abschnittes (11) verkleinert, und wobei zwischen den Vorratsbehältern (23) und der einen Sprühdüse (22) ein Mischer (25) angeordnet ist, wobei der Mischer (25) mit einem Steuergerät (24) verbunden ist, durch das die erste Zusammensetzung entlang des ersten Abschnittes hinsichtlich ihres elektrischen Widerstandes veränderbar und die zweite Zusammensetzung entlang des zweiten Abschnitts mit einem Wesentlichen konstanten elektrischen Widerstand einstellbar ist.

10. Wicklungsstab einer Hochspannungsmaschine, hergestellt nach dem Verfahren nach einem der Ansprüche 1 bis 8 mit Glimmschutz, **dadurch gekennzeichnet, dass** der Außenglimmschutz zusammen mit einem sich anschließenden Endenglimmschutz einen sich stufenlos ändernden Widerstandsbelag aufweist.

11. Wicklungsstab einer Hochspannungsmaschine nach Anspruch 10, der durch Behandlung eines Wicklungsstabs in einer Vorrichtung nach Anspruch 9 herstellbar ist.

## Claims

1. Method for forming corona shielding (7) on a winding bar (4) for high-voltage machines (1) comprising end corona shielding (8) in a first section (9) and outer corona shielding (10) in a second section (11), which adjoins the first section (9), said method comprising the following steps:
- providing (S1) a first composition, which comprises a carrier material and a first filler contained therein and having a first electrical resistance;
- providing (S1) a second composition, which comprises the same carrier material and a second filler contained therein and having a second electrical resistance, wherein the first and second fillers contain an identical dopable semiconductor material, whose doping determines the electrical resistance of the first and second fillers, and wherein the second resistance differs from the first resistance;
- applying (S2) the first composition in the first section (9) so as to form the end corona shielding (8); and
- applying (S2) the second composition in the second section (11) so as to form the outer corona shielding (10),
wherein
the first composition is set during application in such a way that the electrical resistance of the first composition decreases along the first section (9) in the direction of the second section (11),
and wherein,
during application (S2), the proportion by weight of the first filler and the proportion by weight of the second filler are varied continuously along the first section (9) in such a way that the resistance of the first composition varies continuously along the first section (9) and makes a continuous transition into the resistance of the second composition in the second section (11).

2. Method according to Claim 1,
**characterized in that**
the second composition is set during application (S2) such that the electrical resistance of the second composition is substantially constant along the second section (11).

3. Method according to Claim 1 or 2,
**characterized in that**
the electrical resistance of the first composition is set by virtue of a proportion by weight of the first filler being replaced by a proportion by weight of the second filler.

4. Method according to one of Claims 1 to 3,
**characterized in that**
the first composition contains at least one third filler having a third resistance, wherein the third filler likewise comprises the same dopable semiconductor material, and the third resistance differs from the first and second resistances.

5. Method according to one of Claims 1 to 4,
**characterized in that**
the carrier material of the first and second compositions has a filler content of more than 45 wt.%.

6. Method according to one of Claims 1 to 5,
**characterized in that**
the corona shielding (9) is formed in a continuous method.

7. Method according to one of Claims 1 to 6,
**characterized in that**
the first and second compositions are applied by spraying.

8. Method according to one of Claims 1 to 6,
**characterized in that**
the first and second compositions are provided in mixed form by a mixer (25) and applied with a single spray nozzle (22) or in that the first composition is applied with at least one first spray nozzle (22) and the second composition is applied with at least one second spray nozzle (22).

9. Apparatus (19) for implementing the method according to one of Claims 1 to 8, in particular for forming corona shielding (7) on a winding bar (4) for high-voltage machines (1) comprising end corona shielding (8) in a first section (9) and outer corona shielding (10) in a second section (11), which adjoins the first section (9), said apparatus comprising:
- a first device (20) for providing (S1) a first composition, which comprises a carrier material and a first filler contained therein and having a first electrical resistance, and for providing (S1) a second composition, which comprises the same carrier material and a second filler contained therein and having a second electrical resistance, wherein the first and second fillers contain an identical dopable semiconductor material, whose doping determines the electrical resistance of the first and second fillers, wherein the second resistance differs from the first resistance, and wherein the first device (20) has a plurality of storage containers (23) comprising filler which has a different electrical resistance for each storage container (23),
- a second device (21) for applying (S2) the first composition in the first section (9) in order to form the end corona shielding (8), and for applying (S2) the second composition in the second section (11) in order to form the outer corona shielding (10), wherein the second device (21) has one or more spray nozzles (22), wherein the plurality of spray nozzles (22) are each connected to a control device (24), by means of which the first composition is variable in respect of its electrical resistance along the first section and the second composition can be set with a substantially constant electrical resistance along the second section, wherein the first composition is set during application in such a way that the electrical resistance of the first composition decreases along the first section (9) in the direction of the second section (11), and wherein a mixer (25) is arranged between the storage containers (23) and one spray nozzle (22), wherein the mixer (25) is connected to a control device (24), by means of which the first composition is variable in terms of its electrical resistance along the first section and the second composition can be set with a substantially constant electrical resistance along the second section.

10. Winding bar for a high-voltage machine, produced in accordance with the method according to one of Claims 1 to 8, with corona shielding, **characterized in that** the outer corona shielding together with adjoining end corona shielding has a resistance per unit length that is continuously changing.

11. Winding bar for a high-voltage machine according to Claim 10, which can be produced by treating a winding bar in an apparatus according to Claim 9.

## Revendications

1. Procédé pour la constitution d'une protection anti-effluves (7) sur une barre d'enroulement (4) pour des machines à haute tension (1) avec une protection anti-effluves d'extrémité (8) dans une première section (9) et une protection anti-effluves extérieure (10) dans une deuxième section (11), laquelle se raccorde à la première section (9), avec les étapes suivantes :
- préparation (S1) d'une première composition, laquelle comporte un matériau de support et une première matière de charge contenue à l'intérieur de celui-ci avec une première résistance électrique ;
- préparation (S1) d'une deuxième composition, laquelle comporte le même matériau de support et une deuxième matière de charge contenue à l'intérieur de celui-ci avec une deuxième résistance électrique, dans lequel la première et la deuxième matière de charge contiennent un même matériau semi-conducteur dopable, dont le dopage détermine la résistance électrique de la première et de la deuxième matière de charge, et dans lequel la deuxième résistance se distingue de la première résistance ;
- application (S2) de la première composition dans la première section (9) pour la formation de la protection anti-effluves d'extrémité (8) ; et
- application (S2) de la deuxième composition dans la deuxième section (11) pour la formation de la protection anti-effluves extérieure (10),
dans lequel
la première composition est ajustée lors de l'application de telle sorte que la résistance électrique de la première composition diminue le long de la première section (9) dans la direction de la deuxième section (11),
et dans lequel
lors de l'application (S2) le long de la première section (9), la proportion en poids de la première matière de charge et la proportion en poids de la deuxième matière de charge sont amenées à varier en continu de telle sorte que la résistance de la première composition varie en continu le long de la première section (9) et se transforme en continu en la résistance de la deuxième composition dans la deuxième section (11).

2. Procédé selon la revendication 1,
**caractérisé en ce que**
la deuxième composition est ajustée lors de l'application (S2) de telle sorte que la résistance électrique de la deuxième composition soit sensiblement constante le long de la deuxième section (11).

3. Procédé selon la revendication 1 ou la revendication 2, **caractérisé en ce que**
la résistance électrique de la première composition est ajustée par le fait qu'une proportion en poids de la première matière de charge est remplacée par une proportion en poids de la deuxième matière de charge.

4. Procédé selon l'une des revendications 1 à 3,
**caractérisé en ce que**
la première composition contient au moins une troisième matière de charge avec une troisième résistance, dans lequel la troisième matière de charge comporte également le même matériau semi-conducteur dopable et la troisième résistance se distingue de la première et de la deuxième résistance.

5. Procédé selon l'une des revendications 1 à 4, **caractérisé en ce que**
le matériau de support de la première et de la deuxième composition comprend une proportion de matière de charge de plus de 45 % en poids.

6. Procédé selon l'une des revendications 1 à 5,
**caractérisé en ce que**
la protection anti-effluves (9) est constituée dans un procédé continu.

7. Procédé selon l'une des revendications 1 à 6,
**caractérisé en ce que**
la première et la deuxième composition sont pulvérisées.

8. Procédé selon l'une des revendications 1 à 6,
**caractérisé**
**en ce que** la première et la deuxième composition sont préparées sous forme mélangée par un mélangeur (25) et appliquées avec une buse de pulvérisation (22) unique ou en ce que la première composition est appliquée avec au moins une première buse de pulvérisation (22) et la deuxième composition est appliquée avec au moins une deuxième buse de pulvérisation (22).

9. Dispositif (19) pour la mise en œuvre du procédé selon l'une des revendications 1 à 8, en particulier pour la constitution d'une protection anti-effluves (7) sur une barre d'enroulement (4) pour des machines à haute tension (1) avec une protection anti-effluves d'extrémité (8) dans une première section (9) et une protection anti-effluves extérieure (10) dans une deuxième section (11), laquelle se raccorde à la première section (9), avec :
- un premier dispositif (20) pour la préparation (S1) d'une première composition, laquelle comporte un matériau de support et une première matière de charge contenue à l'intérieur de celui-ci avec une première résistance électrique, et pour la préparation (S1) d'une deuxième composition, laquelle comporte le même matériau de support et une deuxième matière de charge contenue à l'intérieur de celui-ci avec une deuxième résistance électrique, dans lequel la première et la deuxième matière de charge contiennent un même matériau semi-conducteur dopable, dont le dopage détermine la résistance électrique de la première et de la deuxième matière de charge, dans lequel la deuxième résistance se distingue de la première résistance, et dans lequel le premier dispositif (20) comprend plusieurs récipients de stockage (23) avec de la matière de charge qui présente pour chaque récipient de stockage (23) une autre résistance électrique,
- un deuxième dispositif (21) pour l'application (S2) de la première composition dans la première section (9) afin de former la protection anti-effluves d'extrémité (8), et pour l'application (S2) de la deuxième composition dans la deuxième section (11) afin de former la protection anti-effluves extérieure (10), dans lequel le deuxième dispositif (21) comprend une ou plusieurs buses de pulvérisation (22), dans lequel les plusieurs buses de pulvérisation (22) sont reliées respectivement à un appareil de commande (24) par l'intermédiaire duquel la première composition est modifiable en ce qui concerne sa résistance électrique le long de la première section et la deuxième composition est ajustable avec une résistance électrique sensiblement constante le long de la deuxième section,
dans lequel la première composition est ajustée lors de l'application de telle sorte que la résistance électrique de la première composition diminue le long de la première section (9) dans la direction de la deuxième section (11), et dans lequel entre les récipients de stockage (23) et la buse de pulvérisation (22) est disposé un mélangeur (25), dans lequel le mélangeur (25) est relié à un appareil de commande (24) par l'intermédiaire duquel la première composition est modifiable en ce qui concerne sa résistance électrique le long de la première section et la deuxième composition est ajustable avec une résistance électrique sensiblement constante le long de la deuxième section.

10. Barre d'enroulement d'une machine à haute tension, fabriquée selon le procédé selon l'une des revendications 1 à 8 avec une protection anti-effluves, **caractérisée en ce que** la protection anti-effluves extérieure comprend conjointement avec une protection anti-effluves d'extrémité raccordée un revêtement électriquement résistant se modifiant progressivement.

11. Barre d'enroulement d'une machine à haute tension selon la revendication 10, laquelle peut être fabriquée par traitement d'une barre d'enroulement dans un dispositif selon la revendication 9.
